Europäisches Patentamt

European Patent Office

Office européen des brevets

(11) Publication number: **0 426 244 A1**

(12) **EUROPEAN PATENT APPLICATION**

(21) Application number: 90202850.5

(22) Date of filing: 25.10.90

(51) Int. Cl.⁵: **B32B 25/08**, B32B 27/08, C08J 5/18, B32B 31/00

(30) Priority: 31.10.89 NL 8902682

(43) Date of publication of application:
08.05.91 Bulletin 91/19

(84) Designated Contracting States:
AT BE CH DE DK ES FR GB IT LI NL SE

(71) Applicant: STAMICARBON B.V.
Mijnweg 1
NL-6167 AC Geleen(NL)

(72) Inventor: Van der Zande, Harold Dick
Bachstraat 29
NL-6438 KK Oirsbeek(NL)

(54) Process for the preparation of objects comprising at least a layer of polyethylene and an elastomeric layer, as well as objects that can be obtained by this process.

(57) The invention relates to a process for the preparation of objects comprising at least a layer of polyethylene with a melt index of at most 0.15 and an elastomeric layer bonded directly to it, these layers being bonded at elevated pressure and at a temperature above the melting point of the polyethylene, and the polyethylene having a weight-average molecular weight of at least $0.5 \times 10^6$ kg/kmole and the polyethylene layer to be bonded having been obtained by removing the solvent from a layer of polyethylene gel.

FIG 1

EP 0 426 244 A1

## PROCESS FOR THE PREPARATION OF OBJECTS COMPRISING AT LEAST A LAYER OF POLYETHYLENE AND AN ELASTOMERIC LAYER, AS WELL AS OBJECTS THAT CAN BE OBTAINED BY THIS PROCESS

The invention relates to a process for the preparation of objects comprising at least a layer of polyethylene with a melt index below 0.15 and an elastomeric layer bonded directly to it, these layers being bonded at elevated pressure and a temperature above the melting point of the polyethylene.

Such a process is known from French patent specification FR-1.567.289, which discloses bonding of an elastomeric layer containing a curing agent to a layer of polyethylene with a melt index of at most 0.15, which is done at a temperature of at least 140 °C and a pressure of at least 2 kg/cm². In this process, bonding takes place simultaneously with curing of the elastomer. The melt index referred to is determined according to ASTM standard 1238-57 T, with an additional weight of 3 kg. A melt index of at most 0.15, determined in this way, usually corresponds to a weight-average molecular weight, $M_W$, of at least 0.5 x 10⁶ kg/kmole.

A drawback of this process is that the attainable bond strength appears to be inadequate for a number of applications, particularly those involving dynamic loading of the object, if use is made of polyethylene with a weight-average molecular weight in excess of 0.5 x 10⁶ kg/kmole.

The present invention aims to provide a process in which said drawback is eliminated or substantially reduced, and in which use can also be made of an already cured elastomeric layer.

According to the invention this is achieved in that the polyethylene has a weight-average molecular weight of at least 0.5 x 10⁶ kg/kmole and in that the polyethylene layer to be bonded has been obtained by removing the solvent from a layer of polyethylene gel.

An object obtained according to the invention surprisingly appears to have a higher bond strength between the polyethylene layer and the elastomeric layer than can be achieved according to the state of the art when a layer of polyethylene with an $M_W$ higher than 0.5 x 10⁶ kg/kmole, obtained in a different way, is bonded to an elastomeric layer under otherwise unchanged process conditions.

An additional advantage of the process according to the invention is that its use yields similar good results when already cured elastomeric layers are started from.

A further advantage of the process according to the invention is that the layer of polyethylene gel can be obtained in very small thicknesses, but may further also vary within wide limits, for instance from 1 μm to 5 mm, so that the various requirements with respect to the thickness of the polyethylene layer, as may be imposed by different applications, can be met.

In the process according to the invention use is made of ultrahigh molecular weight linear polyethylene, further referred to as UHMWPE, with a weight-average molecular weight of at least 0.5 x 10⁶ kg/kmole, preferably at least 0.7 x 10⁶ kg/kmole, and most preferably at least 1 x 10⁶ kg/kmole.

The weight-average molecular weight of UHMWPE is determined using known methods, such as gel permeation chromatography and light scattering, or calculated from the value of the intrinsic viscosity (IV) in decalin at 135 °C.

The weight average molecular weight corresponds to the IV, determined in decalin at 135 °C according to the empirical relation

$$Mw = 5.37 * 10^4 * [IV]^{1.37}$$

UHMWPE is here understood to mean linear polyethylene with fewer than 1 side chain per 100 carbon atoms, and preferably fewer than 1 side chain per 300 carbon atoms, and a similar polyethylene which may also contain minor amounts, preferably less than 5 mole %, of one or more copolymerized other alkenes, such as propylene, butene, pentene, hexene, 4-methyl-pentene, octene, etc., which polyethylene or copolymer of ethylene has a weight-average molecular weight of at least 0.5 x 10⁶ kg/kmole.

The polyethylene may further contain minor amounts, preferably at most 25 wt. %, of one or more other polymers, in particular an alkene-1-polymer, such as polypropylene, polybutadiene, or a copolymer of propylene with a minor amount of ethylene.

Such UHMWPE can be prepared for instance in a Ziegler or a Phillips process using suitable catalysts and known polymerization conditions.

UHMWPE possesses a number of properties making it highly suitable as a protective, or surface properties improving, coating of elastomers. This relates especially to, for instance, its high abrasion resistance and flexural strength, its high chemical resistance, and its low friction coefficient, and furthermore its high impact strength and tensile strength.

The polyethylene layer to be bonded is obtained by removing the solvent from a layer of polyethylene gel, in which the polyethylene has an $M_W$ of at least 0.5 x 10⁶ kg/kmole.

Processes for obtaining such a layer of UHMWPE gel are known in themselves from GB-A-2,164,897, EP-A-64,167, EP-A-115,192 and EP-A-141,419, whioh disclose processes for obtaining a film-shaped UHMWPE gel by extruding or casting an UHMWPE solution such as to obtain the desired shape, followed by rapid cooling of the resulting film-shaped object, which consists of the solution, yielding a film-shaped layer of UHMWPE gel, further referred to as a gel film.

This gel film, obtainable as intermediate product in the processes referred to, is eminently suited for application, after drying, as polyethylene layer in the process according to the invention.

In that case the gel film preferably has a thickness between 0.1 and 10 mm, in particular between 0.5 and 3 mm. In combination with the concentration of the polyethylene in the solution used, this thickness is chosen so that the thickness of the final dried gel film is between 0.05 and 5 mm, preferably between 0.1 and 2 mm.

The concentrations of the UHMWPE in the solution from which the layer of polyethylene gel is formed are between 0.5 and 40 wt. % in the processes referred to. Solutions with a concentration in excess of 40 wt. % are more difficult to handle because of the high viscosity, especially at high molecular weights, but in the context of the process according to the invention, however, layers of polyethylene gel formed from solutions with a UHMWPE concentration up to about 80 wt. % can also be applied.

According to said processes the solvent is removed by evaporation, by compression of the gel film, or by passing the gel film through a liquid bath containing an extraction agent for the solvent, following which the solvent-free gel film is dried.

From said processes it is also known to prepare thinner polyethylene layers, up to about 1 $\mu$m, by drawing in at least one direction of the gel film before solvent removal, after solvent removal, or after solvent removal and drying. Films so drawn can also be applied as UHMWPE layer in the process according to the invention.

Porous UHMWPE layers, drawn or not, may also be used, in all thicknesses, as the polyethylene layer to be bonded in the process according to the invention. Processes for obtaining a porous, film-shaped polyethylene layer from a gel film are known in themselves, for instance from EP-A-160,551.

Such a wide variation in attainable thicknesses of the polyethylene layer cannot be realized in any other way, for instance by ram extrusion, by compression of UHMWPE powder at a temperature above the melting point of the polyethylene, or by peeling off a thin layer of an object obtained by ram extrusion or compression.

The mechanical properties of a UHMWPE layer obtained by solvent removal from a gel film appear to differ from those of a layer obtained in another way, for instance by ram extrusion or compression of normally available UHMWPE powder at a temperature above the melting point of the polyethylene.

Though these polyethylene layers obtained from a gel are brittle and therefore seem unsuitable as a protective layer for elastomeric objects, surprisingly enough the polyethylene layer in the object thus formed appears to again have the normal toughness and the other excellent mechanical and chemical properties, as mentioned above, which are inherent in UHMWPE; it further appears that in the process according to the invention a very strong bond is formed between the PE and the elastomer, while lastly the PE layer appears to possess excellent melt flow properties.

It is especially the surprisingly good flow properties of the polyethylene layer according to the invention that renders the process eminently suited for the preparation of curved, arched, or other non-flat objects. This further makes the possibility to coat elastomeric objects of varying shapes a major advantage of the invention.

A further advantage of the process according to the invention is that the elastomeric layer, just like the polyethylene layer, may vary widely in thickness and can thus be adapted to an intended application.

In the context of the invention an elastomer is defined as a substance which can be drawn to twice its original length at room temperature and which forcefully and in a short time returns to at least approximately its original length after the drawing force has been removed (see the glossary of terms as published by the ASTM Committee D11 on Rubber and Rubber-like Materials).

As elastomers in the object according to the invention all known elastomeric materials can be applied, such as natural rubber, copolymers of butadiene and acrylonitrile, butadienestyrene copolymers, copolymers of butadiene and alkyl acrylates, butyl rubber, olefin rubbers such as ethylene-propylene rubber and EPDM rubber, fluorocarbon rubber, silicon rubber, polyacrylates, polybutadiene and polychloroprene. By preference natural rubber, EP(D)M rubbers and copolymers of butadiene or mixtures of elastomers comprising at least one of these rubbers are applied as elastomeric layers. Special preference is given to the use of styrene-butadiene copolymers (SBR) or a mixture of elastomers comprising a styrene-butadiene rubber.

In the process according to the invention bonding can take place using devices known per se, for instance by compression between heated plates or in heated moulds.

For a good bond, starting from an already cured elastomeric layer, the following process conditions are used:

The temperature should be above the melting point of the polyethylene used, but it should be as low as possible in order to minimize thermal degradation of the polyethylene. The melting point of polyethylene with an $M_W$ higher than $0.5 \times 10^6$ kg/kmole generally lies between about 130 °C and about 160 °C. The pressure may vary between 0.2 and 10 MPa, preferably between 0.4 and 1 MPa. The time during which these conditions should at least be maintained may be between 20 seconds and 300 seconds, depending on the thickness of the polyethylene layer used.

The above process conditions are such that also if use is made of an elastomeric layer that still is to be cured the process conditions required for curing can usually be chosen, without there being any conflict with the process conditions needed for a good bond. The reason for this is that the elastomer curing process usually takes place within a temperature range of 120-180 °C and in the pressure range of above 0.2 MPa during 10 to 30 minutes. Important variables are the activation temperature and the curing rate of the curing agent or system used. This generally makes it possible to adapt the curing conditions to the bonding conditions.

If the process conditions needed for curing of a certain combination of elastomer and curing system are such as to entail the risk of degradation of the polyethylene layer to be bonded, it is preferred to first carry out the curing operation and then bond the polyethylene layer to the cured object under the conditions needed for bonding as described above. This may, for instance, be necessary when use is made of thick elastomeric layers requiring long curing times.

There is no explanation for the bond strength between the polyethylene and the elastomer being higher than that in objects prepared by the known method. However, the morphology of the polyethylene in an object obtained by the process according to the invention appears to differ from that in an object obtained by the known method. By means of transmitted-light microscopy it has been demonstrated that the polyethylene layer in the new products according to the invention has a homogeneous structure, in contrast with the polyethylene layers in conventional products, where the powder grain boundaries are clearly visible. A comparable difference in morphology is visible at the surface of the polyethylene layer when this layer has been made to swell in a solvent.

The invention also relates to new objects that can be obtained by the process according to the invention and that have a homogeneous structure as can be observed by means of transmitted-light microscopy.

Possible applications of the process according to the invention are to be found, for instance, in applying a UHMWPE layer as internal or external coating of objects that otherwise consist mainly of an elastomeric material such as conveyor belts and rolls, gear wheels, roof covering and shock-absorbing objects in many shapes.

The objects according to the invention can also be applied as intermediate product for coating a material, to which UHMWPE normally does not bond, with a UHMWPE layer, the elastomer serving as intermediate material, bonding both to the UHMWPE and the material in question.

The invention will be explained by means of the following examples, without being restricted thereto.

The values given in the examples for the 90° roller peel resistance have been determined according to ASTM standard No. D 3167-76 on 12.5 mm wide and 10 mm thick specimens.

The bond strength is determined according to DIN standard 53530, using 10 mm wide specimens.

Example I

A linear polyethylene with an IV in decalin at 135°C of 15.5, corresponding to a weight-average molecular weight, $M_W$, of $2.2 \times 10^6$ kg/kmole (Himont 312®), was dissolved to a concentration of 20 wt. % in decalin until a homogeneous solution was obtained by extrusion of such a mixture of polyethylene and decalin using a twin screw extruder at a temperature of 180 °C. The extruder head was provided with a wide die with a 2.5 mm extrusion gap through which the solution was extruded into a tape that was cooled in a water bath kept at 20 °C, so that a gel film was obtained. In a hot-air furnace the decalin was removed from the gel film obtained until no residual decalin content could be measured.

The dried gel film, which was about 1.2 mm thick, was cut into sections measuring 250 x 12.5 mm. A 3 mm thick layer of an uncured sulphur-curable styrene-butadiene rubber (SBR) and a 1.2 mm thick test specimen of dried gel film were successively placed in a flat press. To obtain the stiffness needed for the floating roller peel test, a Plexar[R] adhesive film (USI Chemicals Company) and a 6 cm thick UHMWPE layer, obtained by compression of a powder layer of the same UHMWPE as used for the dried gel film at a

4

temperature above the melting point of the polyethylene, were placed on top of these.

This stacked structure, in total about 10 mm thick, was subsequently kept at a pressure of 0.5 MPa and a temperature of 160 °C during 15 minutes in a flat press, so that the elastomer was cured and the dried gel film was bonded directly to the elastomeric layer and, by means of the Plexar[R] adhesive film, to the compressed UHMWPE layer. The laminate obtained was then cooled.

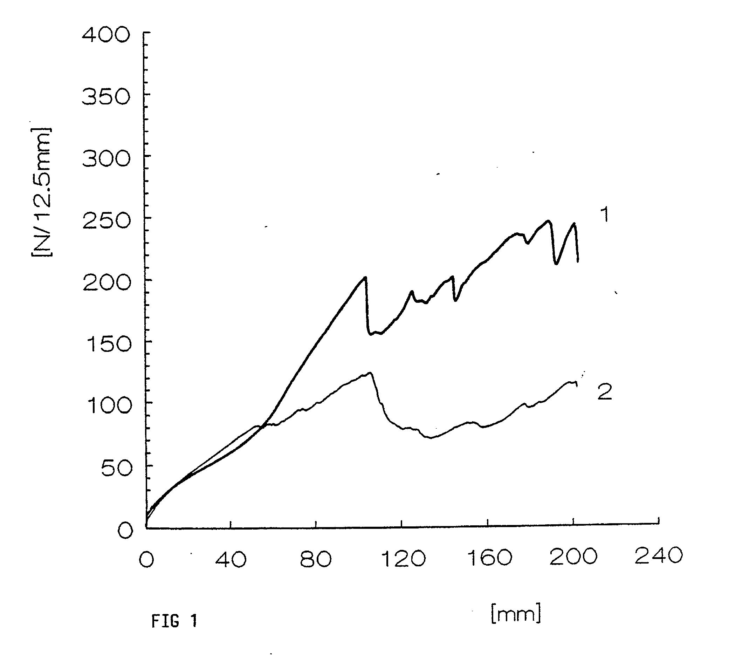

The cooled laminate was subjected to a 90° floating roller peel test according to ASTM D 3167, the load required to separate the elastomeric layer and the dried gel film bonded to it being recorded as a function of jaw displacement. The results are shown in the form of the curve marked "1" in Figure 1, the jaw displacement being plotted on the horizontal axis and the floating roller peel strength on the vertical axis.

Figure 1 shows that the load needed to separate the elastomeric layer and the bonded layer of dried UHMWPE gel during the 90° floating roller peel test is about 200-250 N/12.5 mm.

To examine the morphology of the polyethylene layer after bonding, a laminate consisting of a 1.2 mm thick layer of dried UHMWPE gel film and a 3 mm thick layer of SBR was prepared under the conditions specified in the above and using the same materials.

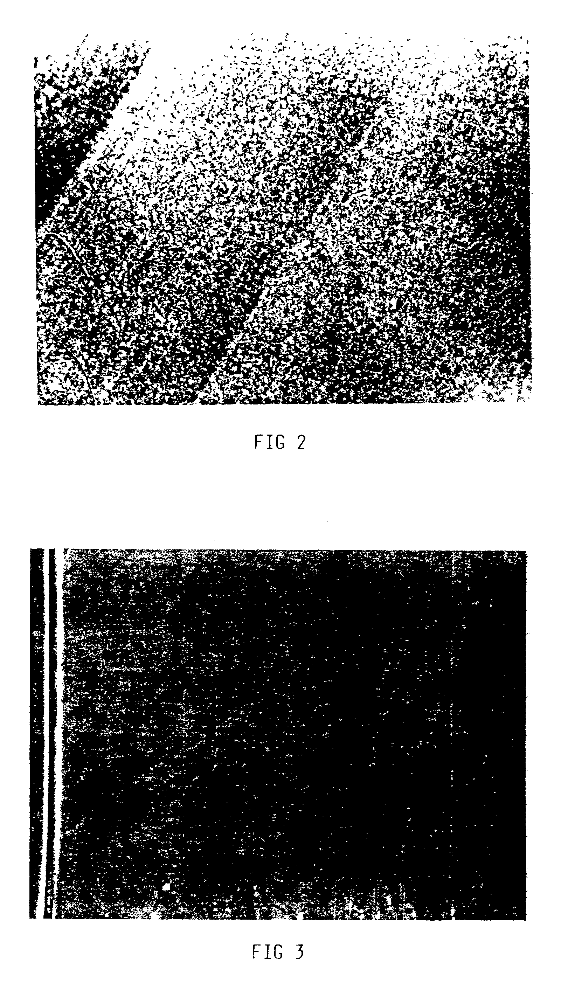

From the UHMWPE layer in this laminate a 7 mm thick specimen was cut off, the structure of which was examined using transmitted-light microscopy with a polarization microscope and a linear magnification of 160x. Fig. 2 presents a photograph of the specimen under these conditions. The photo shows that the polyethylene has a homogeneous structure, while no powder grain boundaries are visible.

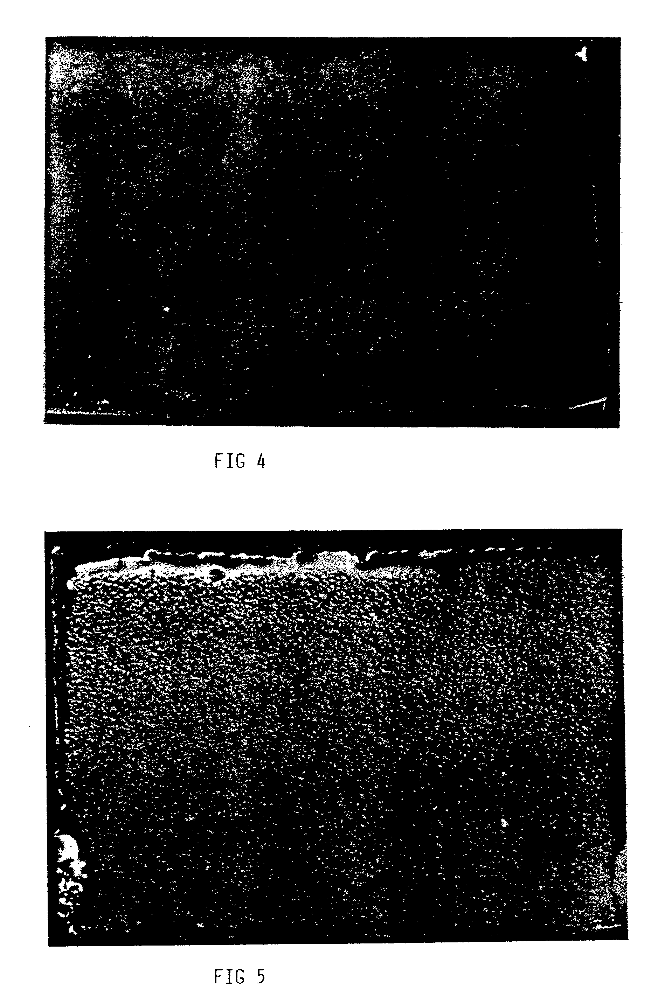

A similar laminate was immersed in decal in having a temperature of 150 °C and kept there for 1 minute. Figure 4 presents a photograph at a linear magnification of 7x of the surface of the UHMWPE layer in the laminate immediately after exposure of the laminate to the heated decal in. This photo, too, does not show any powder structure in the polyethylene.

## Comparative Example A

By way of comparative example the above procedure was repeated but now instead of dried gel film a layer of melt-crystallized UHMWPE was used as the UHMWPE layer on which the bonding strength of the elastomer was determined. This layer was obtained by compression of the same UHMWPE as in Example I at a temperature of 200 °C, i.e. well above the melting point of the polyethylene, in a flat press, first for 2 minutes at a pressure of 0.1 MPa, and consecutively for 5 minutes at a pressure of 1 MPa. The amount of UHMWPE was chosen so that the thickness of the resulting UHMWPE film was about 8 mm.

Since at this temperature the polyethylene on the layer surface is degraded, about 1 mm was milled off on one side of the layer.

Subsequently, a 3 mm thick layer of a non-cured, sulphur-curable SBR and a layer of the 7 mm thick, milled, compressed UHMWPE film, with the milled surface facing the elastomer, were introduced into a flat press, following which a laminate was prepared from the about 10 mm thick structure, this being done in the same way as described in Example I, and the laminate having the dimensions specified there.

This laminate was subsequently subjected to the 90° floating roller peel test according to ASTM D 3167, so that the UHMWPE layer and the elastomer layer were separated. The results of this test are presented in Fig. 1 as curve "2".

Figure 1 shows that the load needed to separate the elastomeric layer and the melt-crystallized UHMWPE layer of compressed powder is 30-50% lower than the load needed to separate the elastomeric layer and a UHMWPE gel film, while bonding of these layers took place under identical conditions.

In a laminate prepared in the same manner, with 1 mm being milled off also from the outside-facing side of the compressed UHMWPE layer, the structure of the polyethylene layer was examined in a similar way as in Example I. Figs. 3 and 5 show the photographs of the polyethylene layer under the same conditions as in Figs. 2 and 4, respectively. Both in Fig. 3 and in Fig. 5 clear powder grain boundaries are visible in the polyethylene.

## Example II and Comparative Example B

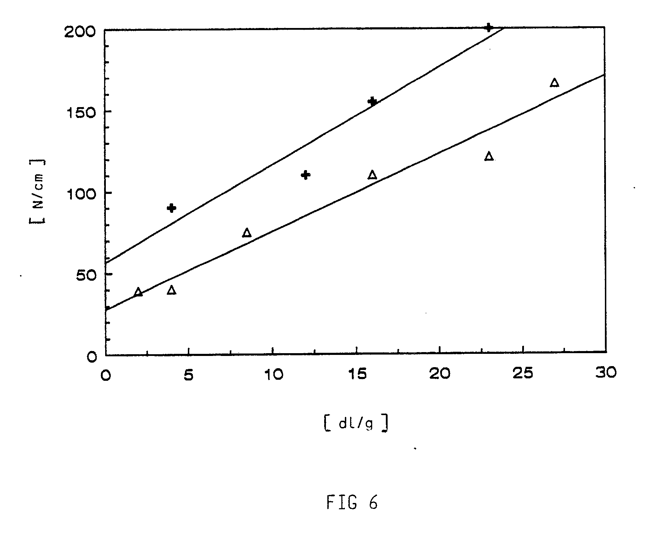

Laminates in which an SBR layer is bonded directly to a layer of polyethylene are produced using layers of polyethylene with different Intrinsic Viscosity values. To this effect the following are successively placed in a flat press: a 1.4-mm thick layer of dried gel film as a reinforcing layer for the following rubber layer, a 3-mm thick layer of SBR and a 1.4-mm thick layer of dried, non-porous gel film or a layer of porous dried gel film with a thickness so that on compression thereof a 1.4-mm thick layer is obtained. The stacked structure is compressed for 30 minutes at a pressure of 0.66 MPa and a temperature of 160°C. The bond strength of the last polyethylene layer applied to the reinforced rubber layer is determined according to DIN 53530. The material data and measuring results are given in Table 1. Figure 6 shows the bond strength of the different specimens in N/cm (Vertical axis) versus the intrinsic viscosity of the polyethylene used in dl/g (Horizontal axis).

By way of comparison, laminates are produced in the manner described above, in which the last polyethylene layer applied each time consists of polyethylene powder with a different IV. In compression under elevated pressure the polyethylene powder is sintered into a compact layer and is bonded to the rubber. The amount of polyethylene powder is chosen so that the thickness of the compressed and sintered layer is 1.4 mm. The material data and the bond strength, determined according to DIN 53530, are shown in Table 1. The measured bond strength values are shown in Fig. 6. Table 1 and the graphical representation of the results in Fig. 6 show that the bonding of a layer of dried polyethylene gel to the rubber layer is on all points better than that of a sintered layer. The surface structure of the various polyethylene layers is the same as that of the corresponding layers of Example 1 and Comparative Example A.

Table 1

| Sintered layer | | |
|---|---|---|
| IV | Form of the polyethylene | bond strength N/cm |
| 2 | powder | 39.0 |
| 4 | powder | 40.3 |
| 8.5 | powder | 75.0 |
| 16 | powder | 110 |
| 23 | powder | 121 |
| 27 | powder | 116.3 |
| Dried gel film | | |
| IV | Form of the polyethylene | bond strength N/cm |
| 4 | porous | 90 |
| 12 | porous | 110 |
| 16 | non-porous | 155 |
| 23 | porous | 200 |

Example III

According to the method of Example II and Comparative Example B laminates are produced, in which the rubber layer consists of, successively, vulcanized SBR, EPDM and natural rubber and unvulcanized SBR, EPDM and natural rubber. The polyethylene used has an IV of 16 dl/g. The bonding takes place at a pressure of 0.66 MPa and a temperature of 160°C, for 20 minutes. The bond strength according to DIN 53530 is determined. The results are shown in Table 2. The bonding of the layer of dried gel film to EPDM and natural rubber also appears to be better than that of the layer of sintered polyethylene.

EP 0 426 244 A1

Table 2

| Bond strength according to DIN 53530 in N/cm | | | | |
|---|---|---|---|---|
| | Unvulcanized rubber layer | | Vulcanized rubber layer | |
| | dried gel film | sintered layer | dried gel film | sintered layer |
| SBR | 152 | 103 | 148 | 107 |
| EPDM | 98 | 82 | 95 | 82 |
| NR | 101 | 93 | 98 | 91d |

**Claims**

1. Process for the preparation of objects comprising at least a layer of polyethylene with a melt index of at most 0.15 and an elastomeric layer bonded directly to it, these layers being bonded at elevated pressure and at a temperature above the melting point of the polyethylene, characterized in that the polyethylene has a weight-average molecular weight of at least $0.5 \times 10^6$ kg/kmole and that the polyethylene layer to be bonded has been obtained by removing the solvent from a layer of polyethylene gel.

2. Process according to claim 1, characterized in that the polyethylene gel layer before or during solvent removal or the resulting polyethylene layer to be bonded is drawn in at least one direction.

3. Process according to either of claims 1-2, characterized in that the polyethylene layer to be bonded is porous.

4. Process according to any one of claims 1-3, characterized in that the weight-average molecular weight of the polyethylene is at least $0.7 \times 10^6$ kg/mole.

5. Process according to any one of claims 1-3, characterized in that the weight-average molecular weight of the polyethylene is at least $1 \times 10^6$ kg/kmole.

6. Process according to any one of claims 1-5, characterized in that the elastomer layer to be bonded has been cured.

7. Process according to any one of claims 1-6, characterized in that the elastomer is natural rubber, an EP-(D)M rubber, a copolymer of butadiene, or a mixture of elastomers comprising at least one of these rubbers.

8. Process according to any one of claims 1-7, characterized in that the elastomer is a styrene-butadiene copolymer or a mixture of elastomers comprising a styrene-butadiene rubber.

9. Object obtainable by the process of any one of claims 1-8, characterized in that the polyethylene layer in the object has a homogeneous structure.

10. Object comprising at least a layer of polyethylene with a melt index of at most 0.15 and an elastomeric layer bonded directly to it, characterized in that the polyethylene has a weight-average molecular weight of at least $0.5 \times 10^6$ kg/kmole and the polyethylene layer has been obtained by removing the solvent from a layer of polyethylene gel.

7

FIG 1

FIG 2

FIG 3

FIG 4

FIG 5

FIG 6

# EUROPEAN SEARCH REPORT

**EP 90 20 2850**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | FR-E-9 449 9   (PNEUMATIQUES, CAOUTCHOUC MANUFACTURE ET PLASTIQUES KLEBER COLOMBES) <br> * Page 1, left-hand column, lines 13-29; page 2, right-hand column, lines 27-33; abstract * <br> — — — | 1,6-10 | B <br> 32 B 25/08 <br> B 32 B 27/08 <br> C 08 J 5/18 <br> B 32 B 31/00 |
| Y | FR-A-2 076 302   (PNEUMATIQUES, CAOUTCHOUC MANUFACTURE ET PLASTIQUES KLEBER COLOMBES) <br> * Page 2, line 21 - page 3, line 4; page 7, lines 2-18; page 16, line 14; claims * <br> — — — | 1,6-10 | |
| X | GB-A-1 242 725   (TENNECO CHEMICALS INC.) <br> * Page 4, lines 36-42; page 5, lines 36-47; page 7, lines 62-73; claims 1-17; figures 1,3 * <br> — — — | 1-3 | |
| A | EP-A-0 181 016   (STAMICARBON B.V.) <br> * Abstract; claims 1-9 * <br> — — — | 2-5 | |
| A | US-A-3 433 700   (N.R. MIGDOL et al.) <br> — — — | 1 | |
| A,D | FR-A-1 567 289   (PNEUMATIQUES, CAOUTCHOUC, MANUFACTURE ET PLASTIQUES KLEBER COLOMBES) <br> — — — — — | 1,4-8 | |
| | | | TECHNICAL FIELDS SEARCHED (Int. Cl.5) |
| | | | B 32 B <br> B 29 C |

The present search report has been drawn up for all claims

| Place of search | Date of completion of search | Examiner |
|---|---|---|
| The Hague | 05 February 91 | MOLTO PINOL F.J. |